# EUROPEAN PATENT SPECIFICATION

(11) **EP 2 207 336 B1**
(45) Date of publication and mention of the grant of the patent: **05.06.2013**
(21) Application number: 08846040.7
(22) Date of filing: 24.10.2008
(51) Int. Cl.: H04M 3/54, H04M 3/58, H04M 7/12, H04L 29/06

(54) **METHOD, SYSTEM AND DEVICE OF CALL FORWARDING**
VERFAHREN, SYSTEM UND VORRICHTUNG ZUR RUFWEITERLEITUNG
PROCÉDÉ, SYSTÈME ET DISPOSITIF DE RENVOI AUTOMATIQUE D'APPEL

(30) Priority: 25.10.2007 CN 200710165402
(43) Date of publication of application: 14.07.2010
(73) Proprietor: Huawei Technologies Co., Ltd., Longgang District, Shenzhen Guangdong 518129 (CN)
(72) Inventor: LONG, Shuiping, Shenzhen Guangdong 518129 (CN); JIN, Hui, Shenzhen Guangdong 518129 (CN)
(74) Representative: Epping - Hermann - Fischer
(86) International application number: PCT/CN2008/072812
(87) International publication number: WO 2009/056059

(56) References cited:
- CN-A- 1 874 379
- KR-A- 20050 076 531
- US-A1- 2006 159 251
- "Universal Mobile Telecommunications System (UMTS); Bearer-independent circuit-switched core network; Stage 2 (3GPP TS 23.205 version 5.15.0 Release 5); ETSI TS 123 205" ETSI STANDARDS, LIS, SOPHIA ANTIPOLIS CEDEX, FRANCE, vol. 3-CN4, no. V5.15.0, 1 October 2007 (2007-10-01), XP014039878 ISSN: 0000-0001
- 3GPP SA WG2: "3rd Generation Partnership Project; Technical Specification Group Core Network and Terminals; Voice Call Continuity between the Circuit-Switched (CS) domain and the IP Multimedia (IP) Core Network (CN) subsystem; Stage 3 (Release 7), TS 24.206 V1.0.0" 3RD GENERATION PARTNERSHIP PROJECT (3GPP); TECHNICALSPECIFICATION (TS), XX, XX,, vol. 24.206, no. v7.0.0, 8 December 2006 (2006-12-08), pages 1-114, XP002489423

## Description

### Field of the Invention

The present invention relates to the mobile communication field, and in particular, to a call transfer method, system and device.

### Background of the Invention

Currently, most mobile communication networks are circuit switched (CS) networks. Operators have already set up perfect and rich service platforms based on CS networks. A mobile switching center (MSC) is responsible for call routing and service logic execution, for example, call transfer. With the continuous development of mobile communication technologies, service networks based on IP switching are emerging, and known as IP multimedia subsystem (IMS) networks. Compared with the CS networks, the IMS networks can provide higher bandwidth and support richer services. The core units in an IMS network are a serving-call session control function (S-CSCF) and various application servers (ASs). The S-CSCF is responsible for routing a call request to a proper AS when conditions are met, and the AS is responsible for executing service logic. A telephony application server (TAS) is an AS that controls the implementation of all supplementary services in the IMS network.

Being complex, the IMS network cannot be deployed within a short period of time. Thus, the CS network and the IMS network will definitely coexist for a certain period of time. To save the construction cost, operators need to unify the service platforms of the CS network and IMS network and migrate the functions of the CS network to the IMS network. As a result, IMS centralized services (ICS) emerge. In the ICS process, a user equipment (UE) sets up an IMS call through voice media over the CS network, and the AS in the IMS network provides call services. The CS bearer is implemented by setting up a CS call between the UE and a new IMS call control function (ICCF). Meanwhile, the service processing logic in the MSC is weakened or removed. In this technology, a media gateway control function (MGCF) is required to implement signaling and media conversions between the CS network and the IMS network.

A voice call continuity (VCC) technology is used to guarantee the voice call continuity when a voice call is transferred between the CS network and the IMS network, and the core unit in this technology is a VCC AS. All calls or sessions must pass through the VCC AS in the IMS network. The VCC AS may act as a back-to-back-user-agent (B2BUA) to control subsequent inter-domain transfer.

The call transfer service is a supplementary service. A user who sets the call transfer service may transfer a received call to a preset third party user. The call transfer service may include a call deflection service and a call forwarding service. In the prior art, when a call transfer service is implemented between the CS network and the IMS network, the called UE performs call transfer and sends a call transfer request to the home MSC of the called UE after a call transfer server of the called UE sends a call request to the called UE; the home MSC of the called UE sends call transfer information that carries the phone number of a UE 3 to the call transfer server; after receiving the call transfer information, the call transfer server allocates an IP multimedia routing number (IMRN) for the home MSC of the called UE; the home MSC of the called UE sends a call request to the call transfer server by using the IMRN number; the call transfer server sends a call request to the S-CSCF according to the obtained phone number of the UE 3; the S-CSCF routes the call request to the TAS according to the initial filter criteria (iFC); the TAS acts as the user agent and sends the call request to the UE 3 through the S-CSCF. That is, there is redundant call request signaling in the call process after the UE 1 performs call transfer, thus causing a waste of network resources.

XP014039878 discloses a method for the call deflection with a possible notification to the calling party using an announcement. The call and the bearer towards the access side are released by a call deflection request message from the access side to the MSC, and the release of the call and the bearer towards the access side is carried out in CS.

US 2006/159251A1 discloses a call method for transferring a call in progress between a first terminal and a second terminal by means of a telecommunication network, to a third terminal. The call between the first terminal and the second terminal is on hold when the second terminal performs the call transfer, and the calls of the second terminal with the network and the call transfer server are interrupted after the call between the first terminal and the third terminal is established.

XP 2489423 discloses a method a method for domain transfer of a CS call towards the IMS domain. The disclosed method ensures voice call continuity across the CS and IMS domains.

### Summary of the Invention

Embodiments of the present invention provide a call transfer method, system and device to reduce the waste of network resources due to the redundant call request signaling in a call process after the called user performs call transfer. A call transfer method includes:
receiving a service request for redirecting to the IMS network from a home mobile switching center, MSC , of a called user equipment, UE,
sending a Release Call message to the home MSC,
after knowing that a called user equipment (UE) performs call transfer, releasing a call signaling connection between a call transfer server and the called UE, and sending a service request for redirecting to a third party UE to a telephony application server (TAS).

A call transfer system includes a call transfer server and a TAS, where: the call transfer server is adapted to: receive a service request for redirecting to the IMS network from a home mobile switching center, MSC , of a called user equipment, UE, send a Release Call message to the home MSC, after knowing that a called UE performs call transfer, release a call signaling connection between the call transfer server and the called UE, and send a service request for redirecting to a third party UE to the TAS.

A call transfer server includes a call transfer information obtaining unit, a resource releasing unit, and a redirecting unit, where:
the call transfer information obtaining unit is adapted to receive a service request for redirecting to the IMS network from a home mobile switching center, MSC, of a called user equipment, UE, and obtain information that a called UE performs call transfer;
a resource releasing unit, adapted to send a Release Call message to the home MSC, and release a call signaling connection between the call transfer server and the called UE after the call transfer information obtaining unit obtains the information that the called UE performs call transfer; and
a redirecting unit, adapted to send a service request for redirecting to a third party UE to a TAS after the call transfer information obtaining unit obtains the information that the called UE performs call transfer.

According to the above technical solution, in the method, system and device provided in embodiments of the present invention, after the information that the called UE performs call transfer is obtained, the call signaling connection between the call transfer server and the called UE is released, and a service request for redirecting to the third party UE is sent to the TAS. In this case, in the call process after the called user performs call transfer, the call request will no longer pass through the call transfer server, but the signaling connection between the called UE and the call transfer server may be released; and a service request for redirecting to the third party UE is sent to the TAS to inform the TAS of sending a call request to the third party UE. Thus, the call request signaling is reduced and network resources occupied by calls are saved.

### Brief Description of the Drawings

FIG. 1 is a flowchart of a first call transfer method provided in an embodiment of the present invention;
FIG. 2 shows a structure of a call transfer system provided in an embodiment of the present invention; and
FIG. 3 shows a structure of a call transfer server provided in an embodiment of the present invention.

### Detailed Description of the Embodiments

For better understanding of the objective, technical solution and merit of the present invention, the following describes the present invention in detail with reference to the accompanying drawings and exemplary embodiments.

The method provided in an embodiment of the present invention includes: after knowing that a called UE performs call transfer, releasing a call signaling connection between the call transfer server and the called UE, and sending a service request for redirecting to a third party UE to the TAS.

The call transfer server may be a VCC AS, an ICCF or any other server that implements centralized control over call services in the CS network and IMS network, or a server that guarantees the continuity of a call between the CS network and the IMS network.

The method for the call transfer server to know that the called UE performs call transfer includes but is not limited to the following modes: In a first mode, after obtaining the information that the called UE performs call transfer, the home MSC of the called UE sends a service request for redirecting to the IMS network to the call transfer server; the call transfer server knows that the current call is a call transfer service according to the service request. In a second mode, after obtaining the information that the called UE performs call transfer, the home MSC of the called UE may send a call request to the call transfer server; the call transfer server judges whether a call request was sent to the home MSC of the called UE previously; if so, the call transfer server determines that the current call is a call transfer service. In a third mode, after obtaining the information that the called UE performs call transfer, the home MSC of the called UE may send call transfer indication information to the call transfer server, so that the call transfer server knows that the current call is a call transfer service. For example, specific parameters may be set in a message sent to the call transfer server to carry call transfer information.

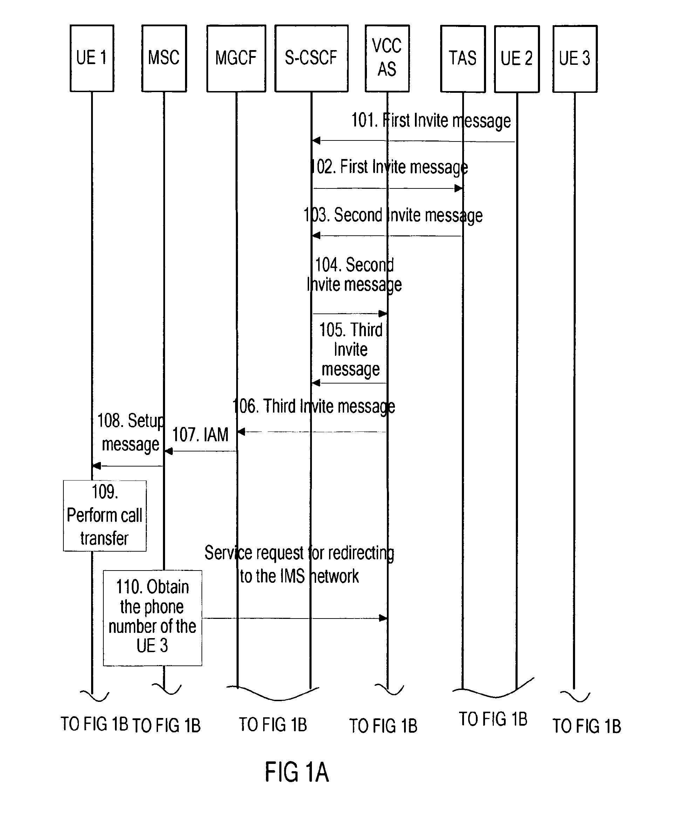

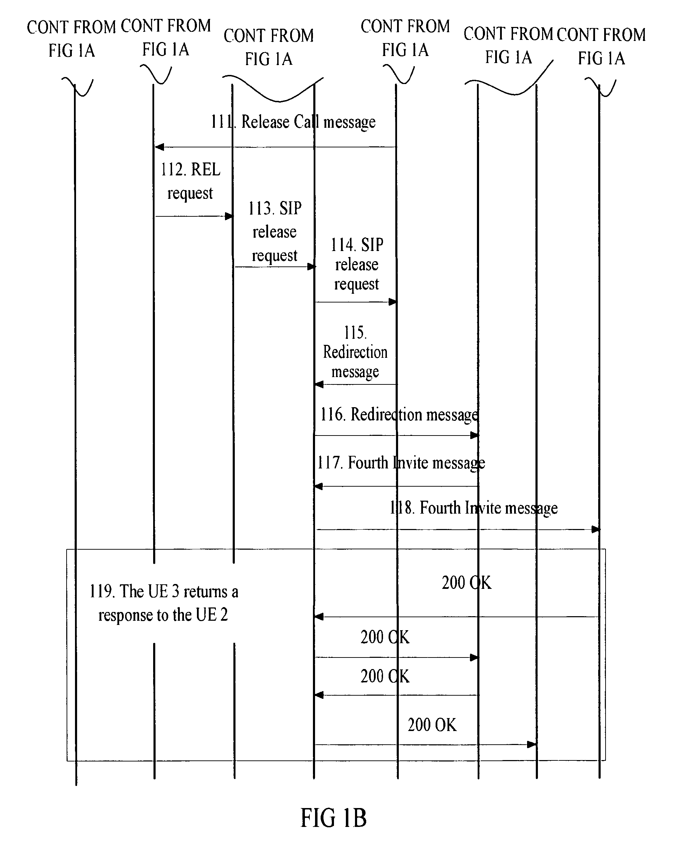

The following describes the preceding method in detail with reference to specific embodiments. FIG. 1 is a flowchart of a call transfer method provided in an embodiment of the present invention. In this embodiment, the UE 2 is a calling UE and is located in the IMS network; the UE 1 is a called UE and is located in the CS network. The UE 1 sets a call transfer function and can forward a received call to a third party UE, that is, UE 3. As shown in FIG. 1, the method includes the following steps:
Step 101: The UE 2 sends a call request to the S-CSCF through a first Invite message that includes the phone number of the UE 1.
Step 102: The S-CSCF routes the first Invite message to the TAS according to the iFC.
Step 103: The TAS acts as the user agent to terminate the call request sent from the first Invite message and generate a second Invite message, and sends a call request to the S-CSCF through the second Invite message.
Step 104: The S-CSCF routes the second Invite message to the VCC AS according to the iFC.
Step 105: The VCC AS allocates a circuit switched domain routing number (CSRN) for the UE 1 of the CS network, acts as the user agent to terminate the second Invite message and generate a third Invite message, and sends a call request to the S-CSCF through the third Invite message that includes the CSRN.

The VCC AS is a call transfer server in the VCC service. Other call transfer servers may be used in other services. For example, the ICCF may be used in the ICS service.
Step 106: The S-CSCF routes the call request that is sent through the third Invite message to the MGCF.
Step 107: The MGCF converts the received third Invite message into an initial address message (IAM) of the CS domain, and sends a call request to the home MSC of the called UE through the IAM.
Step 108: The home MSC of the called UE converts the received IAM into a setup message, and sends a call request to the UE 1 through the setup message.
Step 109: After receiving the call request, the UE 1 performs call transfer.

In this step, if the UE 1 performs call deflection, the UE 1 enters the phone number of the UE 3, and sends the phone number of the UE 3 to the home MSC of the called UE through a Disconnect message. After receiving the Disconnect message, the home MSC of the called UE sends a Release message to the UE 1. After receiving the Release message, the UE 1 returns a Release Complete message to disconnect the call request signaling connection with the MSC. If the UE 1 performs call forwarding (for example, if the UE 1 performs the Call Forwarding Busy function), the UE 1 returns a User Determined User Busy (UDUB) message, which indicates that the UE 1 is busy, to the MSC of the UE 1.

For better description, the MSC of the UE 1 is hereinafter referred to as the MSC.
Step 110: After knowing that the UE 1 performs call transfer, the MSC obtains the third party user information set by the UE 2 (that is, the phone number of the UE 3), and sends a service request for redirecting to the IMS network to the VCC AS, where the service request includes the phone number of the UE 3. The service request for redirecting to the IMS network may be sent through an initial detection point (IDP) message.

In this step, if the UE 1 performs call deflection, the MSC may know that the UE 1 performs call deflection through a Disconnect message sent by the UE 1, and obtain the phone number of the UE 3 from the Disconnect message. If the UE 1 performs call forwarding busy, the MSC may know that the UE 1 performs call forwarding busy through a UDUB message sent by the UE 1, obtain subscription information of the UE 1 from a visitor location register (VLR), and obtain the third party user information (that is, the phone number of the UE 3) from the subscription information of the UE 1 when the UE 1 performs call forwarding busy.

The preceding steps 101 to 110 are available in the prior art.
Step 111: After receiving the service request for redirecting to the IMS network, the VCC AS knows that the called UE performs call transfer, and sends a Release Call message to the MSC.

In this embodiment, the information that the called UE performs call transfer is obtained through a service request for redirecting to the IMS network. The service request may be an IMRN request. Certainly, the information that the called UE performs call transfer may also be obtained through other methods. For example, specific parameters may be set in an IDP message, and a GSM service control function (gsmSCF) unit in the VCC AS may know that the call is a call transfer service and that the third party user information is the phone number of the UE 3 from the specific parameters of the IDP message.

The Release Call message sent by the MSC may include a resource release reason.
Step 112: After receiving the Release Call message, the MSC generates a release (REL) request of the CS domain that includes the resource release reason, and sends the REL request to the MGCF.

The REL request in this step indicates information about network resources occupied by the call request signaling at call setup.
Step 113: The MGCF converts the REL request of the CS domain into a Session Initiation Protocol (SIP) release request according to the resource release reason included in the REL request, and sends the SIP release request to the S-CSCF.

In this step, the SIP release request may be set to different messages according to different resource release reasons. For example, if the resource release reason is client failure, the SIP release request may be a 486 message and a 480 message; if the resource release reason is server failure, the SIP release request may be a 500 message.
Step 114: After receiving a SIP release request, the S-CSCF routes the SIP release request to the VCC AS according to the iFC.

After steps 112 to 113, the call request signaling path set up in steps 105 to 107 is removed. That is, the network resources occupied by the call request signaling set up in steps 105 and 107 are released.

The preceding method for releasing the call signaling connection between the call transfer server and the called UE is as follows: The home MSC of the called UE releases the call signaling connection after receiving a Release Call message; or, the call transfer server actively releases the call signaling connection between the call transfer server and the called UE.
Step 115: The VCC AS generates a service request for redirecting to the third party UE according to the phone number of the UE 3 obtained in step 110, and sends the service request to the S-CSCF.

In this step, the generated service request may be a 302 message and include the phone number of the UE 3.

In step 115 and step 111, a Release Call message may be sent to a vMSC to reject the service request for redirecting to the IMS network at the same time. That is, after obtaining the call transfer information, the VCC AS may send a redirection message to the S-CSCF while sending a Release Call message to the home MSC of the called UE; or the VCC AS may send a Release Call message to the home MSC of the called UE before sending a redirection message to the S-CSCF.
Step 116: The S-CSCF routes the received redirection message to the TAS according to the iFC.

After steps 115 and 116, the call request signaling path set up in steps 103 and 104 is removed. That is, the network resources occupied by the call request signaling set up in steps 103 and 104 are released.
Step 117: After receiving the redirection message, the TAS acts as the user agent to generate a fourth Invite message that includes the phone number of the UE 3 carried in the service request and send a call request to the S-CSCF through the fourth Invite message.
Step 118: The S-CSCF routes the received call request to the UE 3.

If the UE 3 is a UE in the IMS network, the S-CSCF routes the received call request to the UE 3 directly. If the UE 3 is a UE in the CS network, the S-CSCF routes the received call request to the MGCF in the home network of the UE 3; the MGCF converts the fourth Invite message carrying the call request into an IAM, and sends a call request to the vMSC of the UE 3 through the IAM; the vMSC of the UE 3 sends the call request to the UE 3. This belongs to the prior art, and will not be further described.
Step 119: The UE 3 returns an ACK message to the UE 2.

Because the ACK message that the UE 3 returns to the UE 2 is returned according to the call request signaling path, the ACK message may reflect details about the resources occupied by the call request signaling. The ACK message returned in step 119 shows that this process greatly reduces the redundancy of the call signaling and saves network resources occupied by the call signaling.

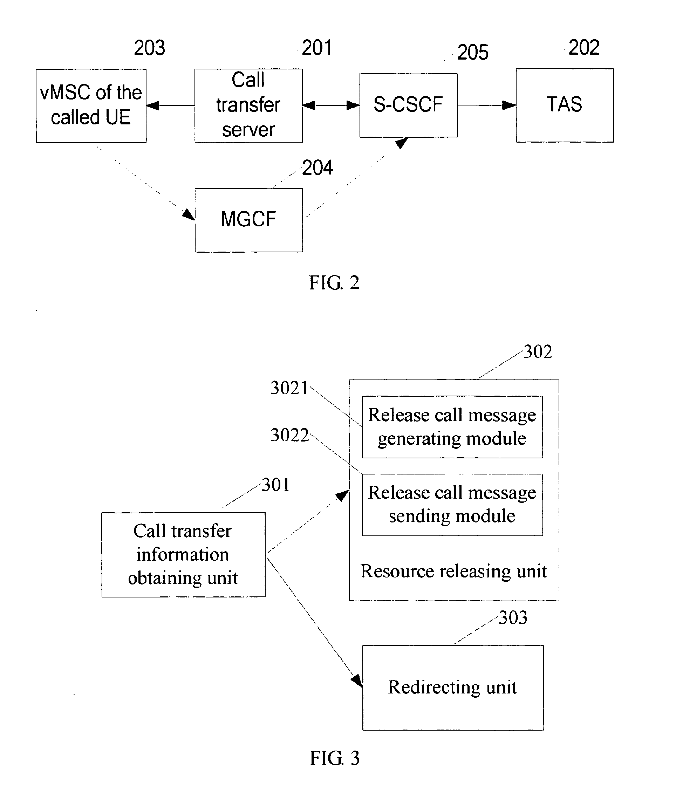

FIG. 2 shows a structure of a call transfer system provided in an embodiment of the present invention. The system includes a call transfer server 201 and a TAS 202.

The call transfer server 201 is adapted to: after knowing that the called UE performs call transfer, release the call signaling connection between the call transfer server and the called UE, and send a service request for redirecting to a third party UE to the TAS.

The TAS 202 is adapted to receive the service request for redirecting to the third party UE sent by the call transfer server 201.

The call transfer server 201 may be a VCC AS, an ICCF or any other server that implements centralized control over call services in the CS network and the IMS network or a server that guarantees the continuity of a call between the CS network and the IMS network.

The system may further include a home MSC 203 of the called UE, an MGCF 204 and an S-CSCF 205.

The home MSC 203 of the called UE may be adapted to: generate a REL request after receiving a Release Call message, and send the REL request.

The MGCF 204 is adapted to: receive the REL request from the home MSC 203 of the called UE, convert the REL message into a SIP release request according to the resource release reason included in the REL request, and send the SIP release request to the S-CSCF 205.

The S-CSCF 205 is adapted to route the received SIP release request to the call transfer server 301.

The call transfer server 201 is also adapted to send a Release Call message to the home MSC of the called UE.

The call connection between the home MSC 203 of the called UE and the call transfer server 201 may be released through the preceding operations among the home MSC 203 of the called UE, MGCF 204, S-CSCF 205 and call transfer server 201.

The S-CSCF 205 may also be adapted to: receive a redirection message from the call transfer server 201, and send the direction message to the TAS 202.

FIG. 3 shows a structure of a call transfer server 201 provided in an embodiment of the present invention. As shown in FIG. 3, the call transfer server may include a call transfer information obtaining unit 301, a resource releasing unit 302, and a redirecting unit 303.

The call transfer information obtaining unit 301 is adapted to obtain the information that the called UE performs call transfer.

The resource releasing unit 302 is adapted to release the signaling connection between the call transfer server and the called UE after the call transfer information obtaining unit 301 obtains the information that the called UE performs call transfer.

The redirecting unit 303 is adapted to send a service request for redirecting to a third party UE to the TAS after the call transfer information obtaining unit 301 obtains the call transfer information.

The resource releasing unit 302 includes a release call message generating module 3021 and a release call message sending module 3022.

The release call message generating module 3021 is adapted to generate a Release Call message after the call transfer information obtaining unit 301 obtains the information that the called UE performs call transfer.

The release call message sending module 3022 is adapted to send the Release Call message generated by the release call message generating module 3021.

According to the preceding technical solution provided in embodiments of the present invention, after the information that the called UE performs call transfer is obtained, the call signaling connection between the call transfer server and the called UE is released, and a service request for redirecting to the third party UE is sent to the TAS. In this case, in the call process after the called UE performs call transfer, the call request will no longer pass through the call transfer server. Instead, the signaling connection between the called UE and the call transfer server may be released; a service request for redirecting to a third party UE is sent to the TAS to inform the TAS of sending a call request to the third party UE. Thus, the call request signaling is reduced and network resources occupied by calls are saved.

In addition, according to the technical solution provided in embodiments of the present invention, in the call process after the called UE performs call transfer, the home MSC of the called UE does not need to receive or send messages, which alleviates the burden of the vMSC.

Furthermore, according to the technical solution provided in embodiments of the present invention, in the call process after the called UE performs call transfer, the conversion between the CS signaling and the SIP signaling is not needed. Instead, the call transfer server sends a redirection message to the TAS directly to inform the TAS of sending a call request to the third party UE. Thus, the time for setting up signaling between the calling UE and the third party UE is reduced, which brings a better experience to users.

## Claims

1. A call transfer method between a circuit switched, CS, network and an IP multimedia subsystem ,IMS ,network, **characterized by**:
receiving a service request for redirecting to the IMS network from a home mobile switching center, MSC , of a called user equipment, UE,
sending a Release Call message to the home MSC (111),
releasing a call signaling connection between a call transfer server and the called UE, after knowing that the called UE performs call transfer, and
sending a service request (116) for redirecting to a third party UE to a telephony application server, TAS.

2. The method of claim 1, wherein the process of knowing that the called UE performs call transfer comprises: knowing that the called UE performs call transfer according to the service request for redirecting to the IMS, network sent from the home MSC of the called UE; or
knowing that the called UE performs call transfer according to call transfer indication information sent from the home MSC of the called UE.

3. The method of claim 1, wherein the process of releasing the call signaling connection between the call transfer server and the called UE comprises: releasing, by the home MSC of the called UE, the call signaling connection between the call transfer server and the called UE.

4. The method of claim 1, wherein the process of releasing the call signaling connection between the call transfer server and the called UE comprises: releasing, by the call transfer server, the call signaling connection between the call transfer server and the called UE.

5. The method of claim 3, wherein the process of releasing the call signaling connection between the call transfer server and the called UE by the home MSC of the called UE comprises:
generating, by the home MSC of the called UE, a release, REL, request after receiving the Release Call message, and sending the REL request to a media gateway control function, MGCF; and
converting, by the MGCF, the REL request into a Session Initiation Protocol, SIP, release request according to a resource release reason carried in the REL request, and routing the SIP release request to the call transfer server through a serving-call session control function, S-CSCF.

6. The method of claim 5, wherein:
when the resource release reason carried in the REL message is client failure, the SIP release request is a 486 message or 480 message; and
when the resource release reason carried in the REL request is server failure, the SIP release request is a 500 message.

7. The method of claim 1, wherein the method further comprises: after receiving the service request for redirecting to the third party UE, generating, by the TAS, an Invite message by using third party user information carried in the service request for redirecting to the third party UE, and sending the generated Invite message to the third party UE.

8. The method of claim 1, wherein the service request for redirecting to the third party UE comprises a 301 message or a 302 message.

9. A call transfer server for a call transfering between a circuit switched, CS, network and an IP multimedia subsystem, IMS , network, **characterized in that** it comprises:
a call transfer information obtaining unit (301), adapted to receive a service request for redirecting to the IMS network from a home mobile switching center, MSC, of a called user equipment, UE, and obtain information that the called UE performs call transfer;
a resource releasing unit (302), adapted to send a Release Call message to the home MSC, and release a call signaling connection between the call transfer server and the called UE after the call transfer information obtaining unit (301) obtains the information that the called UE performs call transfer; and
a redirecting unit (303), adapted to send a service request for redirecting to a third party UE to a telephony application server, TAS, after the call transfer information obtaining unit (301) obtains the information that the called UE performs call transfer.

10. The call transfer server of claim 9, wherein the resource releasing unit (302) comprises:
a release call message generating module (3021), adapted to generate a Release Call message after the call transfer information obtaining unit (301) obtains the information that the called UE performs call transfer; and
a release call message sending module (3022), adapted to send the Release Call message generated by the release call message generating module (3021).

11. A call transfer system, comprising a call transfer server according to any one of claims 9-10.

12. The system of claim 11, further comprising a home mobile switching center, MSC, of the called UE, a media gateway control function, MGCF, and a serving-call session control function, S-CSCF, wherein:
the home MSC of the called UE is adapted to generate a release, REL, request after receiving a Release Call message from the call transfer server" and send the REL request;
the MGCF is adapted to receive the REL request from the home MSC of the called UE, convert the REL request into a Session Initiation Protocol, SIP, release request according to a resource release reason carried in the REL request, and send the SIP release request to the S-CSCF; and
the S-CSCF is adapted to route the received SIP release request to the call transfer server.

## Patentansprüche

1. Anrufweiterleitungsverfahren zwischen einem schaltungsvermittelten Netz, CS-Netz, und einem IP-Multimediauntersystem-Netz, IMS-Netz, **gekennzeichnet durch** Empfangen einer Dienstanforderung zum Umleiten von einer Heimat-Mobilvermittlungszentrale, Heimat-MSC, zu dem IMS-Netz eines angerufenen Anwendergeräts, UE,
Senden einer Anruffreigabenachricht zu der Heimat-MSC (111),
Freigeben einer Anrufsignalgebungsverbindung zwischen einem Anrufweiterleitungs-Server und dem angerufenen UE, nachdem bekannt geworden ist, dass das angerufene UE eine Anrufweiterleitung ausführt, und
Senden einer Dienstanforderung (116) zum Umleiten zu einem UE eines dritten Teilnehmers zu einem Telefonieanwendungs-Server, TAS.

2. Verfahren nach Anspruch 1, wobei der Prozess des Erkennens, dass das angerufene UE eine Anrufweiterleitung ausführt, Folgendes umfasst: Erkennen, dass das angerufene UE eine Anrufweiterleitung ausführt, in Übereinstimmung mit der Dienstanforderung zum Umleiten zu dem IMS-Netz, die von der Heimat-MSC des angerufenen UE gesendet wird; oder
Erkennen, dass das angerufene UE eine Anrufweiterleitung ausführt, in Übereinstimmung mit Anrufweiterleitungs-Angabeinformationen, die von der Heimat-MSC des angerufenen UE gesendet werden.

3. Verfahren nach Anspruch 1, wobei der Prozess des Freigebens der Anrufsignalgebungsverbindung zwischen dem Anrufweiterleitungs-Server und dem angerufenen UE Folgendes umfasst: Freigeben durch die Heimat-MSC des angerufenen UE der Anrufsignalgebungsverbindung zwischen dem Anrufweiterleitungs-Server und dem angerufenen UE.

4. Verfahren nach Anspruch 1, wobei der Prozess des Freigebens der Anrufsignalgebungsverbindung zwischen dem Anrufweiterleitungs-Server und dem angerufenen UE Folgendes umfasst: Freigeben durch den Anrufweiterleitungs-Server der Anrufsignalgebungsverbindung zwischen dem Anrufweiterleitungs-Server und dem angerufenen UE.

5. Verfahren nach Anspruch 3, wobei der Prozess des Freigebens der Anrufsignalgebungsverbindung zwischen dem Anrufweiterleitungs-Server und dem angerufenen UE durch die Heimat-MSC des angerufenen UE Folgendes umfasst:
Erzeugen durch die Heimat-MSC des angerufenen UE einer Freigabeanforderung, REL-Anforderung, nach dem Empfangen der Anruffreigabenachricht und Senden der REL-Anforderung zu einer Medien-Gateway-Steuerfunktion, MGCF; und
Umsetzen durch die MGCF der REL-Anforderung in eine Sitzungsinitiierungsprotokoll-Freigabeanforderung, SIP-Freigabeanforderung, in Übereinstimmung mit einem in der REL-Anforderung geführten Betriebsmittelfreigabegrund und Lenken der SIP-Freigabeanforderung zu dem Anrufweiterleitungs-Server durch eine dienende Anrufsitzungs-Steuerfunktion, S-CSCF.

6. Verfahren nach Anspruch 5, wobei:
dann, wenn der in der REL-Nachricht geführte Betriebsmittelfreigabegrund ein Client-Fehler ist, die SIP-Freigabeanforderung eine 486-Nachricht oder 480-Nachricht ist; und
dann, wenn der in der REL-Anforderung geführte Betriebsmittelfreigabegrund ein Server-Fehler ist, die SIP-Freigabeanforderung eine 500-Nachricht ist.

7. Verfahren nach Anspruch 1, wobei das Verfahren ferner Folgendes umfasst: nach dem Empfangen der Dienstanforderung zum Umleiten zu dem UE eines dritten Teilnehmers Erzeugen durch den TAS einer Einladungsnachricht unter Verwendung von Anwenderinformationen des dritten Teilnehmers, die in der Dienstanforderung geführt werden, um zu dem UE des dritten Teilnehmers umzuleiten, und Senden der erzeugen Einladungsnachricht zu dem UE des dritten Teilnehmers.

8. Verfahren nach Anspruch 1, wobei die Dienstanforderung zum Umleiten zu dem UE des dritten Teilnehmers eine 301-Nachricht oder eine 302-Nachricht enthält.

9. Anrufweiterleitungs-Server für eine Anrufweiterleitung zwischen einem schaltungsvermittelten Netz, CS-Netz und einem IP-Multimediauntersystem-Netz, IMS-Netz, **dadurch gekennzeichnet, dass** er Folgendes umfasst:
eine Anrufweiterleitungsinformations-Erhalteeinheit (301), die dafür ausgelegt ist,
eine Dienstanforderung zum Umleiten zu dem IMS-Netz von einer Heimat-Mobilvermittlungszentrale, Heimat-MSC, eines angerufenen Anwendergeräts, UE, zu empfangen und Informationen, dass das angerufene UE eine Anrufweiterleitung ausführt, zu erhalten;
eine Betriebsmittelfreigabeeinheit (302), die dafür ausgelegt ist, eine Anruffreigabenachricht zu der Heimat-MSC zu senden und eine Anrufsignalgebungsverbindung zwischen dem Anrufweiterleitungs-Server und dem angerufenen UE freizugeben, nachdem die Anrufweiterleitungsinformations-Erhalteeinheit (301) die Informationen, dass das angerufene UE eine Anrufweiterleitung ausführt, erhalten hat; und
eine Umleitungseinheit (303), die dafür ausgelegt ist, eine Dienstanforderung zum Umleiten zu einem UE eines dritten Teilnehmers zu einem Telefonie-Anwendungsserver, TAS, zu senden, nachdem die Anrufweiterleitungsinformations-Erhalteeinheit (301) die Informationen, dass das angerufene UE eine Anrufweiterleitung ausführt, erhalten hat.

10. Anrufweiterleitungs-Server nach Anspruch 9, wobei die Betriebsmittelfreigabeeinheit (302) Folgendes umfasst:
ein Anruffreigabenachricht-Erzeugungsmodul (3021), das dafür ausgelegt ist, eine Anruffreigabenachricht zu erzeugen, nachdem die Anrufweiterleitungsinformations-Erhalteeinheit (301) die Informationen, dass das angerufene UE eine Anrufweiterleitung ausführt, erhalten hat; und
ein Anruffreigabenachricht-Sendemodul (3022), das dafür ausgelegt ist, die Anruffreigabenachricht, die durch das Anruffreigabenachricht-Erzeugungsmodul (3021) erzeugt wird, zu senden.

11. Anrufweiterleitungssystem, das einen Anrufweiterleitungs-Server nach einem der Ansprüche 9-10 umfasst.

12. System nach Anspruch 11, das ferner eine Heimat-Mobilvermittlungszentrale, MSC-Zentrale, des angerufenen UE, eine Medien-Gateway-Steuerfunktion, MGCF, und eine dienende Anrufsitzungs-Steuerfunktion, S-CSCF, umfasst, wobei die Heimat-MSC des angerufenen UE dafür ausgelegt ist, eine Freigabeanforderung, REL-Anforderung zu erzeugen, nachdem eine Anruffreigabenachricht von dem Anrufweiterleitungsserver empfangen worden ist, und die REL-Anforderung zu senden;
die MGCF dafür ausgelegt ist, die REL-Anforderung von der Heimat-MSC des angerufenen UE zu empfangen, die REL-Anforderung in eine Sitzungsinitüerungsprotokoll-Freigabeanforderung, SIP-Freigabeanforderung, in Übereinstimmung mit einem in der REL-Anforderung geführten Betriebsmittelfreigabegrund umzusetzen und die SIP-Freigabeanforderung zu der S-CSCF zu senden; und
die S-CSCF dafür ausgelegt ist, die empfangene SIP-Freigabeanforderung zu dem Anrufweiterleitungs-Server zu lenken.

## Revendications

1. Procédé de transfert d'appel entre un réseau à commutation de circuits, CS, et un réseau de sous-système multimédia IP, IMS, **caractérisé par** :
recevoir une requête de service demandant la redirection vers le réseau IMS depuis un centre de commutation mobile, MSC, domestique d'un équipement utilisateur, UE, appelé,
envoyer un message Libérer l'appel au MSC (111) domestique,
libérer une connexion de signalisation d'appel entre un serveur de transfert d'appel et l'UE appelé, après avoir été informé que l'UE appelé exécute un transfert d'appel, et
envoyer une requête de service (116) demandant la redirection vers un UE tiers à un serveur d'application de téléphonie, TAS.

2. Procédé selon la revendication 1, dans lequel le processus consistant à être informé que l'UE appelé exécute un transfert d'appel comprend les étapes suivantes : être informé que l'UE appelé exécute un transfert d'appel selon la requête de service demandant la redirection vers le réseau IMS envoyée à partir du MSC domestique de l'UE appelé ; ou
être informé que l'UE appelé exécute un transfert d'appel selon des informations d'indication de transfert d'appel envoyées à partir du MSC domestique de l'UE appelé.

3. Procédé selon la revendication 1, dans lequel le processus consistant à libérer la connexion de signalisation d'appel entre le serveur de transfert d'appel et l'UE appelé comprend l'étape suivante : libérer, par le MSC domestique de l'UE appelé, la connexion de signalisation d'appel entre le serveur de transfert d'appel et l'UE appelé.

4. Procédé selon la revendication 1, dans lequel le processus consistant à libérer la connexion de signalisation d'appel entre le serveur de transfert d'appel et l'UE appelé comprend l'étape suivante : libérer, par le serveur de transfert d'appel, la connexion de signalisation d'appel entre le serveur de transfert d'appel et l'UE appelé.

5. Procédé selon la revendication 3, dans lequel le processus consistant à libérer la connexion de signalisation d'appel entre le serveur de transfert d'appel et l'UE appelé par le MSC domestique de l'UE appelé comprend les étapes suivantes :
générer, par le MSC domestique de l'UE appelé, une requête de libération, REL, après la réception du message Libérer l'appel, et envoyer la requête REL à une fonction de commande de passerelle multimédia, MGCF ; et
convertir, par la MGCF, la requête REL en une requête de libération de protocole d'initiation de session, SIP, selon une raison de libération de ressources contenue dans la requête REL, et router la requête de libération SIP vers le serveur de transfert d'appel par l'intermédiaire d'une fonction de commande de session servir l'appel, S-CSCF.

6. Procédé selon la revendication 5, dans lequel :
lorsque la raison de libération de ressources contenue dans le message REL est échec client, la requête de libération SIP est un message 486 ou un message 480 ; et
lorsque la raison de libération de ressources contenue dans la requête REL est échec serveur, la requête de libération SIP est un message 500.

7. Procédé selon la revendication 1, le procédé comprenant en outre les étapes suivantes : après la réception de la requête de service demandant la redirection vers l'UE tiers, générer, par le TAS, un message d'invite à l'aide des informations d'utilisateur tiers contenues dans la requête de service demandant la redirection vers l'UE tiers, et envoyer le message d'invite généré à l'UE tiers.

8. Procédé selon la revendication 1, dans lequel la requête de service demandant la redirection vers l'UE tiers comprend un message 301 ou un message 302.

9. Serveur de transfert d'appel permettant un transfert d'appel entre un réseau à commutation de circuits, CS, et un réseau de sous-système multimédia IP, IMS, **caractérisé en ce qu'**il comprend :
une unité d'obtention d'informations de transfert d'appel (301), conçue pour recevoir une requête de service demandant la redirection vers le réseau IMS à partir d'un centre de commutation mobile, MSC, domestique d'un équipement utilisateur, UE, appelé et obtenir des informations indiquant que l'UE appelé exécute un transfert d'appel ;
une unité de libération de ressources (302), conçue pour envoyer un message Libérer l'appel au MSC domestique, et libérer une connexion de signalisation d'appel entre le serveur de transfert d'appel et l'UE appelé après que l'unité d'obtention d'informations de transfert d'appel (301) a obtenu les informations indiquant que l'UE appelé exécute un transfert d'appel ; et
une unité de redirection (303), conçue pour envoyer une requête de service demandant la redirection vers un UE tiers vers un serveur d'application de téléphonie, TAS, après que l'unité d'obtention d'informations de transfert d'appel (301) a obtenu les informations indiquant que l'UE appelé exécute un transfert d'appel.

10. Serveur de transfert d'appel selon la revendication 9, dans lequel l'unité de libération de ressources (302) comprend :
un module de génération de message Libérer l'appel (3021), conçu pour générer un message Libérer l'appel après que l'unité d'obtention d'informations de transfert d'appel (301) a obtenu les informations indiquant que l'UE appelé exécute un transfert d'appel ; et
un module d'envoi de message Libérer l'appel (3022), conçu pour envoyer le message Libérer l'appel généré par le module de génération de message Libérer l'appel (3021).

11. Système de transfert d'appel, comprenant un serveur de transfert d'appel selon l'une quelconque des revendications 9-10.

12. Système selon la revendication 11, comprenant en outre un centre de commutation mobile, MSC, domestique de l'UE appelé, une fonction de commande de passerelle multimédia, MGCF, et une fonction de commande de session servir l'appel, S-CSCF:
le MSC domestique de l'UE appelé étant conçu pour générer une requête de libération, REL, après la réception d'un message Libérer l'appel à partir du serveur de transfert d'appel, et envoyer la requête REL ;
la MGCF étant conçue pour recevoir la requête REL à partir du MSC domestique de l'UE appelé, convertir la requête REL en une requête de libération de protocole d'initiation de session, SIP, selon une raison de libération de ressources contenue dans la requête REL, et envoyer la requête de libération SIP à la S-CSCF ; et
la S-CSCF étant conçue pour router la requête de libération SIP reçue vers le serveur de transfert d'appel.
